# EUROPÄISCHE PATENTANMELDUNG

(11) **EP 2 322 874 A1**
(43) Veröffentlichungstag der Anmeldung: **18.05.2011**
(21) Anmeldenummer: 10191043.8
(22) Anmeldetag: 12.11.2010
(51) Int. Cl.: F24J 2/52

(54) **Dachhaken**

(30) Priorität: 16.11.2009 DE 202009015593 U; 08.06.2010 DE 202010007681 U
(71) Anmelder: Köngener Asset Management UG (haftungsbeschränkt), 73257 Köngen (DE)
(72) Erfinder: Hoch, Norbert, 86916 Kaufering (DE)
(74) Vertreter: Reitstötter - Kinzebach

(57) **Zusammenfassung**

Die Erfindung betrifft einen Dachhaken zur Montage eines Solarmoduls auf einem Dach, mit einem Befestigungsmittel (11) zur Befestigung des Dachhakens an dem Tragwerk des Daches und einem Haltemittel (13), das mit dem zu montierenden Solarmodul verbindbar ist. Der erfindungsgemäße Dachhaken ist dadurch gekennzeichnet, dass das Befestigungsmittel (11) und das Haltemittel (13) durch Materialumformung, beispielsweise durch Verpressen, Verprägen oder Verquetschen, miteinander verbindbar sind. Dazu kann das Befestigungsmittel (11) als Platte (12) ausgebildet sein, die wenigstens eine Öffnung (21,31,32) aufweist, in welche wenigstens eine Nase (22,27,28) des Haltemittels (13) eingreift. Die Nase (27,28) kann auf Höhe der Platte (12) wenigstens eine Auskehlung (29,30) aufweisen.

## Beschreibung

Die vorliegende Erfindung betrifft einen Dachhaken zur Montage eines Solarmoduls auf einem Dach, wobei der Dachhaken ein Befestigungsmittel zur Befestigung des Dachhakens an dem Tragwerk des Daches, beispielsweise an einem Dachsparren, und ein Haltemittel, das mit dem zu montierenden Solarmodul verbindbar ist, aufweist.

Solarmodule, unter denen in der vorliegenden Anmeldung sowohl solarthermische Module als auch Photovoltaikmodule verstanden werden, werden üblicherweise auf geneigten Dächern in einer Aufdachkonstruktion montiert. Daher ist es erforderlich, das Solarmodul mit dem Tragwerk des Daches zu verbinden. Zu diesem Zweck werden üblicherweise Dachhaken eingesetzt, die einerseits die Befestigungsmittel zur Befestigung des Dachhakens an dem Tragwerk des Daches und andererseits ein Haltemittel, das mit dem zu montierenden Solarmodul verbindbar ist, aufweisen. Das Haltemittel wird durch die Dachauflage auf die Dachoberseite geführt. Bei einem Ziegeldach kann das Haltemittel beispielsweise als U-förmiger Haken ausgebildet sein, welcher einen Dachziegel umgreift.

Derartige Dachhaken können einstückig ausgebildet sein. Eine höhere Flexibilität bei der Fertigung derartiger Dachhaken wird jedoch erreicht, wenn die Dachhaken mehrteilig ausgebildet sind, da beispielsweise durch Kombination separater Befestigungsmittel und Haltemittel eine leichtere Anpassung an unterschiedliche Tragwerkkonstruktionen und Solarmodule möglich ist. Ein derartiger mehrteiliger Dachhaken ist beispielsweise aus dem deutschen Gebrauchsmuster DE 20 2007 011 725 U1 bekannt. Der dort beschriebene Dachhaken besteht aus einem Befestigungsmittel und einem Haltemittel, die als separate Bauteile ausgebildet und durch Verschweißen zusammengefügt sind. Ein derartiger Dachhaken ist aber in der Herstellung aufwendig und teuer und kann nur aus Materialien hergestellt werden, die gut miteinander verschweißbar sind.

Der vorliegenden Erfindung liegt daher das technische Problem zugrunde, einen Dachhaken bereitzustellen, welcher die Flexibilität bei der Herstellung unterschiedlichster Dachhakenvarianten beibehält, gleichzeitig aber einfacher und kostengünstiger in der Herstellung ist.

Gelöst wird dieses Problem durch den Dachhaken mit den Merkmalen des vorliegenden Anspruchs 1. Vorteilhafte Weiterbildungen des erfindungsgemäßen Dachhakens sind Gegenstände der abhängigen Ansprüche.

Demnach betrifft die Erfindung einen Dachhaken zur Montage eines Solarmoduls auf einem Dach mit einem Befestigungsmittel zur Befestigung des Dachhakens an dem Tragwerk des Daches und einem Haltemittel, das mit dem zu montierenden Solarmodul verbindbar ist, wobei der erfindungsgemäße Dachhaken dadurch gekennzeichnet ist, dass das Befestigungsmittel und das Haltemittel durch Materialumformung miteinander verbindbar sind. Der erfindungsgemäße Dachhaken ist daher besonders einfach und kostengünstig herstellbar und es kann grundsätzlich jedes Material verwendet werden, das eine Materialumformung, insbesondere zur Herstellung einer formschlüssigen Verbindung zwischen den beiden Bauteilen, erlaubt.

Geeignete Umformungstechniken zur Verbindung des Befestigungsmittels und des Haltemittels des erfindungsgemäßen Dachhakens sind beispielsweise Verpressen, Verprägen oder Verquetschen.

Bei der Herstellung des erfindungsgemäßen Dachhakens können beide Bauteile eine Materialumformung erfahren, bevorzugt erfährt jedoch nur eines der beiden Bauteile eine Materialumformung.

Gemäß einer ersten Ausführungsform wird das Haltemittel derartig umgeformt, dass eine nicht mehr lösbare formschlüssige Verbindung zwischen Befestigungsmittel und Haltemittel entsteht. Dazu kann das Befestigungsmittel beispielsweise als Platte ausgebildet sein, in welcher ein Langloch ausgespart ist, in das eine Nase des Haltemittels eingreift, wobei die Nase mindestens so lang ist, dass sie durch das Langloch hindurch auf die gegenüberliegende Seite der Platte ragt. Der durch das Langloch ragende Teil der Nase wird dann derart umgeformt, dass das Haltemittel in der Platte fixiert ist. Dazu kann der durch das Langloch ragende Teil der Nase beispielsweise durch Verpressen derart verbreitert werden, dass der entstehende Querschnitt größer als der Querschnitt des Langloches ist, so dass ein Zurückgleiten aus dem Langloch heraus verhindert wird. Auf der dem umgeformten Teil der Nase gegenüberliegenden Seite der Platte weist das Haltemittel wenigstens eine Schulter auf, welche gegen diese Plattenseite in Anlage kommt, so dass auch ein weiteres Hineinrutschen des Haltemittels in das Langloch der Platte verhindert wird.

Gemäß einer anderen Ausführungsform weist das Haltemittel an wenigstens einem Ende wenigstens eine Nase auf, die in eine entsprechende Öffnung in dem als Platte ausgebildeten Befestigungsmittel eingesetzt werden kann. Die Nase weist im eingesetzten Zustand auf Höhe der Platte wenigstens eine Auskehlung auf. Zum Verbinden von Haltemittel und Platte wird bei dieser Variante die Platte auf Höhe der Auskehlung derart umgeformt, dass umgeformtes Material der Platte in die Auskehlungen eingreift und so das Haltemittel in der Platte fixiert. Eine besonders stabile Verbindung ist erhältlich, wenn man an dem Ende des Haltemittels zwei seitlich voneinander beabstandete Nasen mit Auskehlungen vorsieht, die in zwei voneinander beabstandete Öffnungen der Platte eingreifen.

Die Platte kann beispielsweise trapezförmig ausgebildet sein und sich beispielsweise vom Langloch weg verjüngen. Eine derartige Platte sorgt einerseits für einen sicheren Halt des Befestigungsmittels auf dem Tragwerk des Daches, benötigt aber, beispielsweise verglichen mit einer rechteckigen oder quadratischen Platte, weniger Material.

Die Platte weist vorzugsweise ein oder mehrere Löcher, beispielsweise Rundlöcher, auf, durch die die Platte mit dem Tragwerk des Daches verschraubt oder vernietet werden kann.

Das Haltemittel kann beispielsweise als im wesentlichen U-förmiger Haken ausgebildet sein. An einem freien Ende des Hakens kann bei einer vorteilhaften Ausführungsform des erfindungsgemäßen Dachhakens ein Langloch zum Verbinden des Hakens mit dem zu montierenden Solarmodul vorgesehen sein. An dem, dem Langloch gegenüberliegenden freien Ende des Hakens ist in diesem Fall die oben erwähnte Nase zur Verbindung mit dem Haltemittel vorgesehen. Das freie Ende des Hakens kann zur Herstellung einer Rastverbindung profiliert sein.

Wie oben bereits erwähnt, kann der Dachhaken aus beliebigen Werkstoffen und Werkstoffkombinationen bestehen, wobei zumindest der umzuformende Teil des Dachhakens aus einem umformbaren Material bestehen muss. Bevorzugt bestehen Befestigungsmittel und Haltemittel des Dachhakens aber aus einem metallischen Werkstoff, insbesondere einem korrosionsbeständigen metallischen Werkstoff.

Die Erfindung wird im Folgenden unter Bezugnahme auf die beigefügte Zeichnung näher erläutert. In der Zeichnung zeigt
- Figur 1: eine perspektivische Ansicht einer bevorzugten Ausführungsform des erfin- dungsgemäßen Dachhakens vor dem Zusammenfügen von Befestigungs- mittel und Haltemittel;
- Figur 2: eine perspektivische Ansicht einer besonders bevorzugten Ausführungs- form des erfindungsgemäßen Dachhakens;
- Figur 3: das als Haken ausgebildete Haltemittel des Dachhakens der Figur 2;
- Figur 4: das als Grundplatte ausgebildete Befestigungsmittel des Dachhakens der Figur 2;
- Figur 5: eine weitere Ausführungsform des erfindungsgemäßen Dachhakens;
- Figur 6: eine weitere Ausführungsform des erfindungsgemäßen Dachhakens und
- Figur 7: eine weitere Ausführungsform des erfindungsgemäßen Dachhakens;

In der Zeichnung erkennt man eine insgesamt mit der Bezugsziffer 10 bezeichnete bevorzugte Ausführungsform des erfindungsgemäßen Dachhakens. Der Dachhaken 10 weist ein Befestigungsmittel 11, das als Metallplatte 12 ausgebildet ist, und ein Haltemittel 13, das als im wesentlichen U-förmiger Haken 14 ausgebildet ist, auf. Die Platte 12 weist mehrere Rundlöcher 15 auf, mittels denen die Platte 12 auf einem (nicht dargestellten) Tragwerk, beispielsweise einem Dachsparren, eines Daches befestigbar ist. Dazu können beispielsweise Holzschrauben durch die Löcher 15 in den Dachsparren eingedreht werden. Der Haken 14 weist in der dargestellten Ausführungsform einen ersten Schenkel 16 auf, in welchem ein Langloch 17 zur Befestigung des Solarmoduls ausgespart ist. Ein bogenförmiger Abschnitt 18 des Hakens 14 verbindet den ersten Schenkel 16 mit einem zweiten Schenkel 19, welcher in ein Fußteil 20 übergeht, welches im Wesentlichen senkrecht in ein in der Platte 12 ausgespartes Langloch 21 eingesetzt wird. Dazu weist das Fußteil 20 eine gegenüber dem restlichen Fußteil verjüngte Nase 22 auf, deren Querschnitt im Wesentlichen dem Querschnitt des Langloches 21 entspricht. Durch die Verjüngung werden seitlich Schultern 23, 24 ausgebildet, mit denen der Fuß 20 auf der Oberseite 25 der Platte 12 in Anschlag kommt. Die Nase 22 ragt nach Einsetzen in das Langloch 21 durch die Unterseite 26 der Platte 12 hinaus und wird durch Verpressen so umgeformt, dass der Querschnitt des über die Unterseite 26 der Platte 12 hinausragenden Teils der Nase 22 größer als der Querschnitt des Langlochs 21 ist. Das Zusammenwirken des umgeformten Teils der Nase 22 und der Schultern 23 und 24 sorgt demnach für eine feste Verbindung der Platte 12 und des Hakens 14.

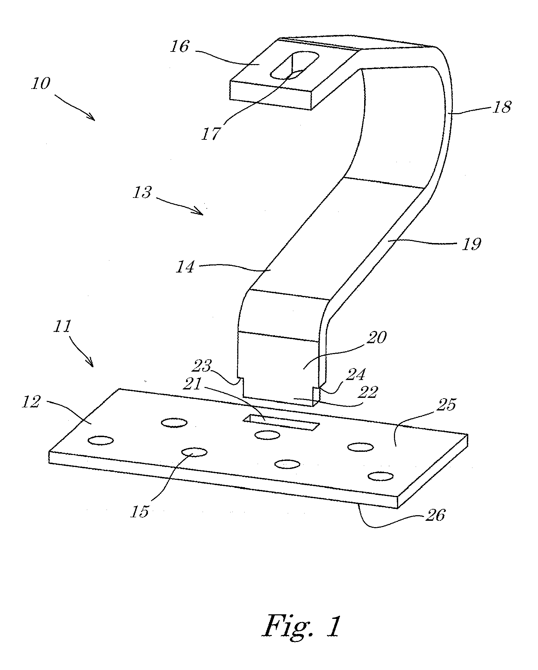

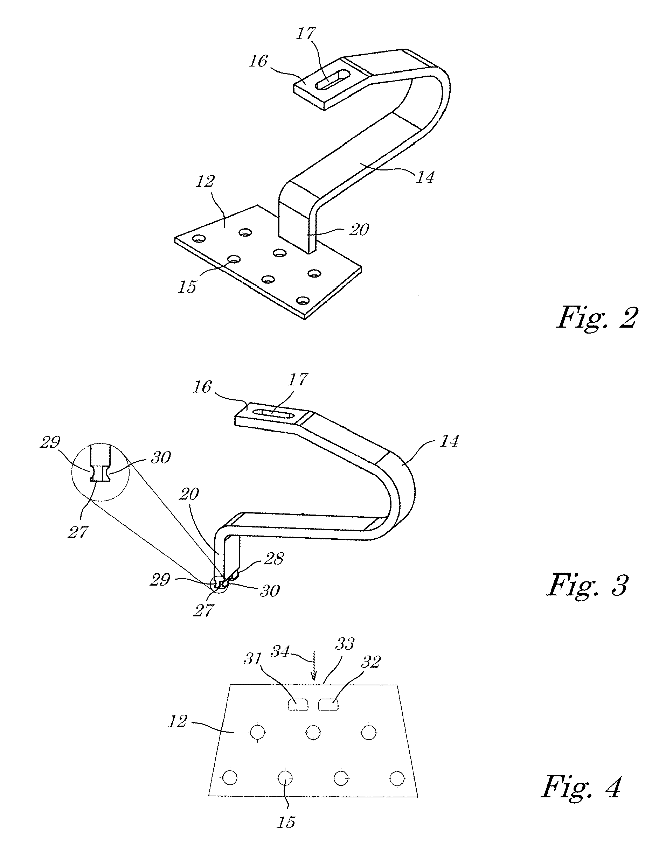

Die folgenden Figuren 2 bis 7 zeigen besonders bevorzuge Ausführungsformen des erfindungsgemäßen Dachhakens. Bauteile, welche Bauteilen entsprechen, die bereits im Zusammenhang mit der Ausführungsform der Figur 1 erläutert wurden, werden mit denselben Bezugsziffern bezeichnet und nicht mehr ausführlicher erläutert.

Die in den Figuren 2 bis 4 dargestellte Variante des erfindungsgemäßen Dachhakens unterscheidet sich vom Dachhaken der Figur 1 insbesondere durch die Ausgestaltung des in die Platte 12 eingesetzten Fußteils 20 des Hakens 14. Wie man insbesondere der Figur 3 entnimmt, weist das Fußteil 20 zwei seitlich voneinander beabstandete Nasen 27, 28 auf, die jeweils an Vorder- und Rückseite Auskehlungen 29, 30 aufweisen, in welche Material der verformten Platte 12 eingreifen kann. Dazu weist die Platte 12 zwei entsprechend voneinander beabstandete Öffnungen 31, 32 auf, die so dimensioniert sind, dass der Haken 14 mit den Nasen 27, 28 in die Öffnungen eingesetzt werden kann. Anschließend wird an der Stirnseite 33 der Platte 12 ein geeignetes Presswerkzeug angesetzt, das die Platte durch Ausüben eines Drucks in der mit dem Pfeil 34 bezeichneten Richtung derart kalt verformt, dass Material der Platte 12 in die Auskehlungen 29, 30 der Nasen 27, 28 gepresst wird. Damit ist eine stabile und belastungsfähige formschlüssige Verbindung zwischen dem Haken 14 und der Platte 12 gewährleistet.

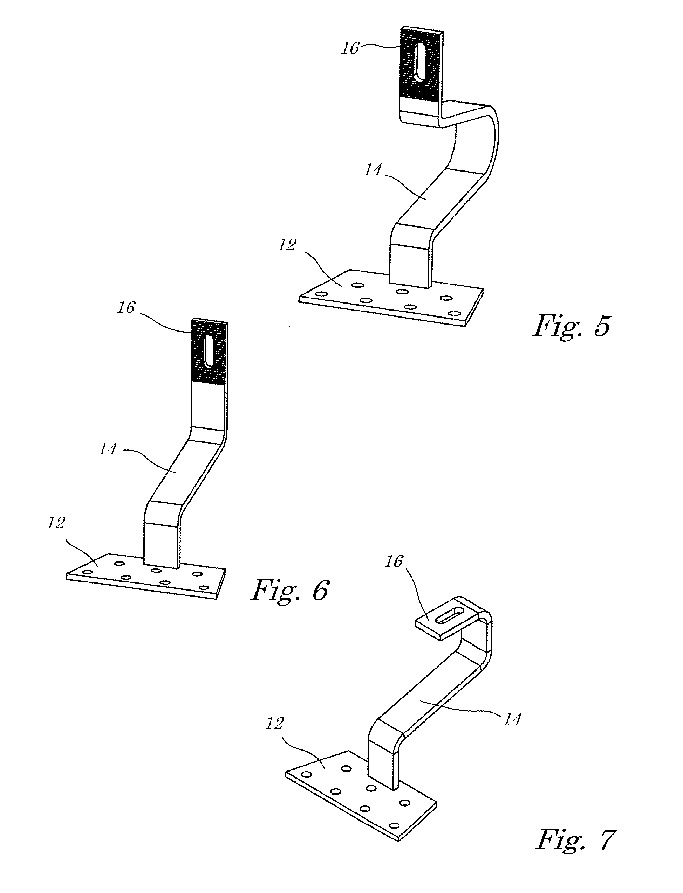

Die Figuren 5, 6 und 7 zeigen weitere Ausführungsformen des erfindungsgemäßen Dachhakens. Bei den Varianten der Figuren 5 und 6 ist das freie Ende 16 des Hakens 14 zusätzlich profiliert, um eine Rastverbindung mit den zu befestigenden Solarmodulen herstellen zu können, so dass eine präzise Einstellung des Solarmoduls ermöglicht wird.

## Patentansprüche

1. Dachhaken zur Montage eines Solarmoduls auf einem Dach, mit einem Befestigungsmittel (11) zur Befestigung des Dachhakens an dem Tragwerk des Daches und einem Haltemittel (13), das mit dem zu montierenden Solarmodul verbindbar ist, **dadurch gekennzeichnet, dass**
das Befestigungsmittel (11) und das Haltemittel (13) durch Materialumformung miteinander verbindbar sind.

2. Dachhaken gemäß Anspruch 1, **dadurch gekennzeichnet, dass** das Befestigungsmittel (11) und das Haltemittel (13) durch Verpressen, Verprägen oder Verquetschen miteinander verbunden sind.

3. Dachhaken gemäß einem der Ansprüche 1 oder 2, **dadurch gekennzeichnet, dass** das Befestigungsmittel (11) als Platte (12) ausgebildet ist, die wenigstens eine Öffnung (21,31,32) aufweist, in welche wenigstens eine Nase (22,27,28) des Haltemittels (13) eingreift.

4. Dachhaken gemäß Anspruch 3, **dadurch gekennzeichnet, dass** die wenigstens eine Öffnung als Langloch (21) ausgebildet ist, in welches die Nase (22) des Haltemittels (13) eingreift, wobei ein durch das Langloch (21) ragender Teil der Nase (22) derart umgeformt ist, dass das Haltemittel (13) in der Platte (12) fixiert ist.

5. Dachhaken gemäß Anspruch 4, **dadurch gekennzeichnet, dass** die Nase (22) derart verjüngt ist, dass das Haltemittel (13) wenigstens eine Schulter (23, 24) aufweist, die gegen die dem umgeformten Teil der Nase gegenüberliegenden Seite (25) der Platte (12) in Anlage ist.

6. Dachhaken gemäß Anspruch 3, **dadurch gekennzeichnet, dass** die wenigstens eine Nase (27,28) auf Höhe der Platte (12) wenigstens eine Auskehlung (29,30) aufweist und dass die Platte (12) auf Höhe der Auskehlung (29,30) derart umgeformt ist, dass umgeformtes Material der Platte (12) in die Auskehlung eingreift und das Haltemittel (13) in der Platte (12) fixiert.

7. Dachhaken gemäß Anspruch 6, **dadurch gekennzeichnet, dass** das Haltemittel (13) zwei seitlich voneinander beabstandete Nasen (27,28) mit Auskehlungen aufweist, in zwei voneinander beabstandete Öffnungen (31,32) der Platte (12) eingreifen.

8. Dachhaken gemäß einem der Ansprüche 3 bis 7, **dadurch gekennzeichnet, dass** die Platte (12) trapezförmig ausgebildet ist.

9. Dachhaken gemäß einem der Ansprüche 3 bis 8, **dadurch gekennzeichnet, dass** die Platte (12) Löcher (15) zum Verschrauben mit dem Tragwerk des Daches aufweist.

10. Dachhaken gemäß einem der Ansprüche 1 bis 9, **dadurch gekennzeichnet, dass** das Haltemittel (13) als im wesentlichen U-förmiger Haken (14) ausgebildet ist.

11. Dachhaken gemäß Anspruch 10, **dadurch gekennzeichnet, dass** der Haken (14) an seinem einen freien Ende ein Langloch (17) zum Verbinden des Hakens (14) mit dem Solarmodul aufweist.

12. Dachhaken gemäß Anspruch 11 in Verbindung mit einem der Ansprüche 3 bis 9, **dadurch gekennzeichnet, dass** an dem, dem Langloch (17) gegenüberliegenden freie Ende des Hakens (14) die wenigstens eine Nase (22,27,28) vorgesehen ist.

13. Dachhaken gemäß einem der Ansprüche 10 bis 12, **dadurch gekennzeichnet, dass** das freie Ende des Hakens (14) profiliert ist.

14. Dachhaken gemäß einem der Ansprüche 1 bis 14, **dadurch gekennzeichnet, dass** der Dachhaken aus einem metallischen Werkstoff besteht.

15. Dachhaken gemäß Anspruch 14, **dadurch gekennzeichnet, dass** der Werkstoff Edelstahl oder Aluminium ist.
